# EUROPEAN PATENT SPECIFICATION

(11) **EP 3 096 086 B1**
(45) Date of publication and mention of the grant of the patent: **15.05.2019**
(21) Application number: 16170574.4
(22) Date of filing: 20.05.2016
(51) Int. Cl.: F24C 7/08, F24C 15/10, H05B 6/12

(54) **COOKING DEVICE WITH INDUCTION HOB**
GARGERÄT MIT EINEM INDUKTIONSKOCHFELD
APPAREIL DE CUISSON AVEC UNE PLAQUE DE CUISSON À INDUCTION

(30) Priority: 21.05.2015 IT UB20150691
(43) Date of publication of application: 23.11.2016
(73) Proprietor: Valvasori Marmi di Valvasori Maurizio & C. S.A.S., 33030 Dignano (UD) (IT)
(72) Inventor: Valvasori, Maurizio, 33033 Biauzzo di Codroipo (UD) (IT)
(74) Representative: Petraz, Gilberto Luigi

(56) References cited:
- WO-A1-2012/137481
- GB-A- 1 473 582
- US-A- 4 151 387
- US-A1- 2004 155 032

## Description

### FIELD OF THE INVENTION

The present invention concerns a cooking device with an induction hob, used to heat and/or cook food.

### BACKGROUND OF THE INVENTION

Cooking devices are known, which comprise a support plane and an induction hob comprising one or more induction plates able to be selectively activated to heat and/or cook the food contained in suitable containers or receptacles.

The installation of plate-type induction hobs in state-of-the-art support planes requires the support plane to have a through aperture, of suitable sizes, through which the induction hob can be adequately fixed.

Support planes are known, which have an aperture made in a substantially rectangular shape in order to house a mono-block induction hob, that is, consisting of a single support on which at least one induction plate is mounted.

A known induction hob also comprises a cover, usually made of glass-ceramic, to protect the induction plates and also to safeguard the electric components used to allow the induction hob to function.

Moreover, support planes are known which have a plurality of apertures, made for example in a substantially circular or elliptical shape, to house a modular induction hob, i.e. consisting of a plurality of induction plates that can be separated from each other.

In known solutions, whether they are monoblock or modular, the induction plates are positioned flush or slightly raised with respect to the corresponding through apertures made in the support plane.

To achieve this installation, every through aperture is made slightly larger than the corresponding induction plate, to take into account the possible effects of heat dilation to which the materials of the induction plates are subjected.

Therefore, interspaces or gaps are generated between the perimeter of the through aperture and the induction plates.

To overcome the empty space of the interspace and possibly to support the induction plates, the space is normally filled, at the moment of installation, using filling pastes for grooves, such as putty or sealants.

A typical disadvantage of cooking devices with induction hobs of a known type is the possible breakage of the induction plates of said cooking devices caused by the need of the materials to dilate, caused by the sealing.

Another disadvantage is that it is impossible, or extremely difficult, to perform dis-assembly operations, for example to replace or repair the whole induction hob or the at least one induction plate, due to the sealing between the induction plates and the support plane.

Another disadvantage of cooking devices with an induction hob installed flush with the upper surface of the support plane is that it is difficult and time-consuming to achieve an installation of this type with all the induction plates perfectly flush with the support plane.

Another disadvantage is that in state-of-the-art cooking devices with induction hobs it is difficult to clean residual food in the discontinuous zone between the support plane and the induction hob.

Furthermore, the esthetics obtainable are not optimal, because some induction plates can protrude more or less than others above the support plane, and liquids or powders can infiltrate in the discontinuous zones, which cause permanent damage to zones of the support plane adjacent to the induction plates or to the covers of the induction plates themselves.

GB 1.473.582 discloses an electric heating system wherein, inside seatings provided in a plane, coils formed by electrical conductors are completely housed

US 4.151.387 and WO 2012/137481 disclose cooking apparatus wherein the coils are completely located below the cooking plane and distanced from it by an air gap.

There is therefore a need to perfect a cooking device with induction hob that can overcome at least one of the disadvantages of the state-of-the-art.

In particular, one purpose of the invention is to obtain a cooking device that allows easy installation of the induction hob and also a simple dis-assembly thereof, so as to carry out possible repairs or even complete replacement.

Another purpose of the present invention is to obtain a cooking device that allows to improve accessibility to the induction hob for maintenance operations.

Another purpose of the present invention is to obtain a cooking device that is efficient and reliable, and also esthetically pleasing, easy and quick to assemble without requiring particular and extensive attention and checks.

Moreover, one purpose of the present invention is to provide a cooking device that is practical and simple to clean, and which prevents infiltrations and leakages, without requiring any sealing of the gaps between the support plane and induction plates.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a cooking device is provided comprising a support plane and an induction hob usable to heat and/or cook food.

According to the present invention, the cooking device is made starting from a slab comprising an upper surface, completely flat, continuous and without interruptions, and a lower surface to which at least one induction hob is associated, which includes at least one induction plate.

According to some embodiments of the present invention, the lower surface of the support plane comprises at least one aperture connected to an induction plate seating, configured to house at least one induction plate of the induction hob.

In one embodiment, the induction plate seating is advantageously made at least partly in the thickness of the support plane.

According to some embodiments of the present invention, the induction plate seatings are made, for example but not only, by removal of material, and have an upper surface separated from the upper surface of the support plane by a distance such as to allow the electromagnetic field generated by the induction plates of the induction hob to pass, in order to heat and/or cook the food.

According to one aspect of the present invention, laterally between the induction plate and the corresponding induction plate seating an empty space or perimeter interspace is provided, sized adequately to take into account the dilations due to the heating to which the induction plates are subjected when they are active.

This solution allows to prevent cyclical and repeated mechanical stresses between the induction plate and the corresponding induction plate seating in the event of heat dilation, also allowing an easier extraction of the induction plates in the case of maintenance or replacement in the event of malfunction or damage/breakage.

According to some embodiments of the present invention, the upper surface of the support plane comprises indicators that signal the position of an underlying induction plate, allowing to identify a heating part of the upper surface of the support plane.

According to one embodiment of the present invention, the induction plates are maintained in a correct position inside the respective induction plate seating by means of at least one attachment element.

According to some embodiments of the present invention, a command panel is associated with the upper surface of the support plane, to selectively activate the induction plates.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view from above of a cooking device with induction hob according to embodiments described here;
- fig. 2 is a perspective view from below of a cooking device with induction hob according to other embodiments described here;
- fig. 3 is a perspective view from above of a support plane for a cooking device according to other embodiments described here;
- fig. 4 is a perspective view from below of the support plane for a cooking device in fig. 3;
- fig. 5 is a view from above of the support plane for the cooking device in fig. 3;
- fig. 6 is a front view of the support plane for the cooking device in fig. 3 with an induction hob;
- fig. 7 is a perspective view from above of a support plane for a cooking device according to other embodiments described here;
- fig. 8 is a perspective view from below of the support plane for the cooking device in fig. 7;
- fig. 9 is a view from above of the support plane for the cooking device in fig. 7;
- fig. 10 is a front view of the support plane for the cooking device in fig. 7 with an induction hob.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

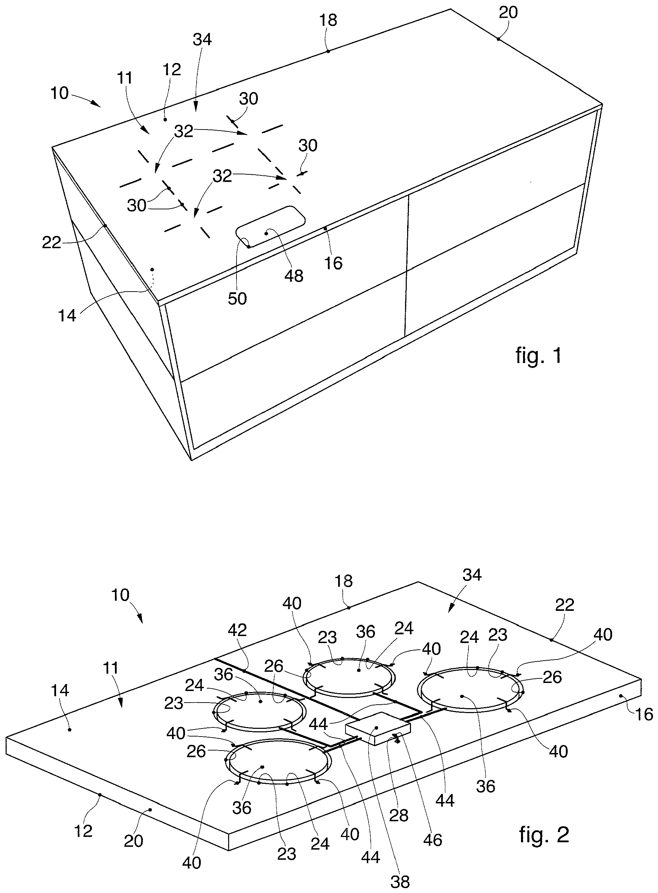

With reference to fig. 1, this is used to describe example embodiments of a cooking device 10 with at least one support plane 11 and an induction hob 34 usable, for example, in a kitchen to heat and/or cook food.

The references adopted hereafter concern a user positioned at the front of the cooking device 10 on the side normally used.

According to variants, the support plane 11 can have a substantially prismatic shape with a quadrangular base, like a parallelepiped, but it can also have a prismatic shape with a triangular, pentagonal, hexagonal or other appropriate shape.

According to variants, the support plane 11 can alternatively have a substantially cylindrical shape, or a prism with an elliptical base.

According to other variants, the support plane 11 can have beveled or rounded edges and/or corners.

Preferably, the height of the prism, or its thickness S, is considerably less than the sizes represented by the bases of the prism, thus configuring the support plane 11 like a slab with plan sizes suitable to house an induction hob 34.

In order to use a limited amount of material to make the support plane 11, the size of its thickness S can have values comprised between 5 mm and 50 mm, advantageously between 7 mm and 40 mm, more advantageously between 10 mm and 35 mm.

According to variants, the support plane 11 can comprise an upper surface 12, a lower surface 14, a front edge 16, a rear edge 18, a right lateral edge 20 and a left lateral edge 22.

According to other variants, the support plane 11 can be installed on a piece of kitchen furniture, for example part of a linear kitchen, a corner kitchen or with an island.

Furthermore, the support plane 11 can be installed flush with respect to the walls of the piece of furniture, or can be equipped with an edge that exceeds the sizes of the piece of furniture on which it rests.

According to variants, the support plane 11 can be made for example of ceramic, porcelain stoneware, stone, sintered stone, marble, granite, Corian or similar materials, or any other material that allows the electromagnetic field generated by the induction hob 34 to pass through the support plane 11 and is suitable to resist the working temperatures of the induction hob 34.

Alternatively, the support plane 11 can also be made as a combination of several materials, of which at least one having the characteristics described above.

According to variants described using fig. 1, the support plane 11 can preferably be made in a single body.

According to other variants, not shown here, the support plane 11 could also be made as several pieces.

According to variants described using fig. 1, the upper surface 12 of the support plane 11 can be preferably completely flat.

According to other variants, not shown, the upper surface 12 of the support plane 11 could have grooves and/or ribs.

According to variants described using fig. 1, the upper surface 12 of the support plane 11 can comprise a seating 50 for a command panel, made as a cavity in the support plane 11, with sizes suitable to house a corresponding command panel 48 usable to selectively activate the induction plates 36.

The installation of the command panel 48 can be done so that it is internal but conveniently flush, or also slightly raised with respect to the upper surface 12 of the support plane 11.

According to variants described using fig. 2, a cooking device 10 can comprise at least one induction hob 34 installed close to and joined with the lower surface 14 of the support plane 11.

According to variants, an induction hob 34 suitable to be associated with the support plane 11 can comprise at least one induction plate 36, advantageously a plurality of induction plates 36, by way of example from one to eight induction plates 36, preferably from two to six induction plates 36, even more preferably from three to five induction plates 36.

According to variants, the lower surface 14 of the support plane 11 can comprise at least one aperture 23 communicating with an induction plate seating 24.

Advantageously, the lower surface 14 can comprise a plurality of apertures 23 each communicating with a respective induction plate seating 24.

According to variants, the support plane 11 can comprise by way of example from one to eight induction plate seatings 24, preferably from two to six induction plate seatings 24, even more preferably from three to five induction plate seatings 24.

Each induction plate seating 24 is made in the thickness S of the support plane 11, is open at the lower part and blind above; it can also comprise an upper surface 13 and can be configured to include at least one induction plate 36.

The upper surface 13 can be flat and substantially parallel to the lower surface 14.

Furthermore, each induction plate seating 24 can be made by means of a progressive removal of material from an original block from which the support plane 11 is obtained.

Alternatively, the support plane 11 can be obtained from a mold already provided of the induction plate seatings 24.

According to variants, the support plane 11 can be modular, meaning that several support planes 11 can be installed, one next to the other so that overall they define a more extended support plane 11.

According to variants described using fig. 2, the induction hob 34 can include at least one main power wiring 42.

According to other variants, the at least one main power wiring 42 can be connected to a shunt box 38 from which shunted power wirings 44 can branch off, by way of example equal in number to the number of induction plates 36 of the induction hob 34.

Moreover, the induction hob 34 can include at least one command wiring 46.

According to still other variants, the support plane 11 can be provided with a hole 28 that connects the lower surface 14 with the upper surface 12, in particular it connects the lower surface 14 with the command panel seating 50. The hole 28 can have a diameter of a size at least equal to or more than the diameter of the command wiring 46.

The command wiring 46 can pass through the hole 28 to connect the shunt box 38 with the command panel 48, to which it carries power and signal.

According to variants described using fig. 2, each induction plate seating 24 is slightly bigger than the corresponding induction plate/plates 36, to take into account and compensate possible dilations of the induction plates 36.

The induction plates 36 of the induction hobs 34 are usually made circular, but it is not excluded that they can be made elliptical, square, rectangular, hexagonal or other shapes.

In the same way, the induction plate seatings 24 can be made following the profile of the induction plates 36, but with slightly bigger sizes.

It is not advised to make the induction plate seatings 24 too big with respect to the corresponding induction plates 36, since this could excessively weaken the structure of the support plane 11.

According to variants, the installation of the induction plates 36 inside the respective induction plate seatings 24 is conveniently centered with respect to the latter.

Therefore, between the induction plate 36 and the corresponding induction plate seating 24 an empty space or interspace 26 is laterally determined.

The interspace 26 can have a thickness comprised between 0.5 mm and 6 mm, preferably between 1 mm and 5 mm, even more preferably between 1.5 mm and 4 mm.

According to variants, the interspace 26 is left free, i.e. it is not filled with sealant materials.

According to variants described using fig. 2, to support each induction plate 36 in the corresponding induction plate seating 24, attachment brackets 40 are provided, which can be firmly anchored to the lower surface 14 of the support plane 11 by attachment elements.

The induction plates 36 can be attached so as to make them adhere properly to the internal surface 13 of the induction plate seating 24, that is, without leaving any spaces.

Each induction plate 36 can be supported by at least one attachment bracket 40, advantageously a plurality of attachment brackets 40 for example equidistant from each other.

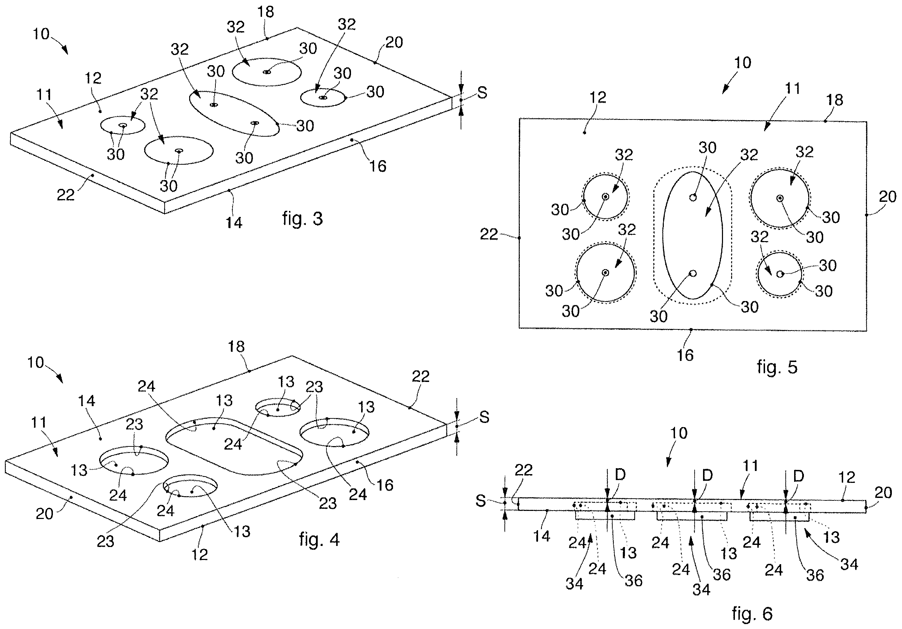

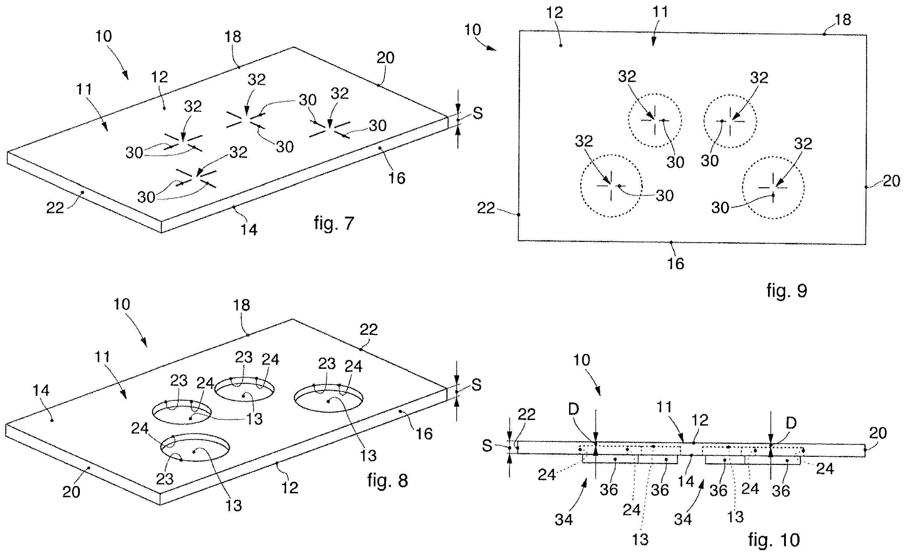

According to variants described using figs. 3 and 7, the support plane 11 can comprise indicators 30 on its upper surface 12.

According to variants described using figs. 5 and 9, the indicators 30 are advantageously located on the part of the upper surface 12 corresponding, on the opposite side, to the part of the lower surface 14 affected by a respective induction plate 36.

According to variants, the indicators 30 can be obtained by way of example by affixing special varnishes resistant to high temperatures, by means of incisions in the material of which the support plane 11 is made, or also in the form of bas-reliefs.

When the cooking device 10 is functioning, that is, at least one induction plate 36 of the induction hob 34 is active, the function of the indicators 30 is to signal to the user the exact location of a heating part 32, so as to allow the user to identify where to position a suitable container to heat and/or cook the food.

On the contrary, when the cooking device 10 is not functioning, that is, no induction plate 36 of the induction hob 34 is active, the function of the indicators 30 is to signal to the user the exact position of the heating parts 32, functioning as a warning, so as to prevent the user getting burnt, at least for the first moments after the induction hob 34 has been switched off, since the upper surface 12 of the support plane 11 could be still too hot and hence could cause burning if touched.

According to variants described using figs. 5 and 9, the heating part 32 can be a part belonging to the upper surface 12 of the support plane 11.

According to variants, the heating part 32 substantially coincides with the sizes of the internal surface 13 of the corresponding induction plate seating 24 and hence also with the bulk of the corresponding induction plate 36.

According to variants described using fig. 4, induction plate seatings 24 can be made, configured to contain at least one induction plate 36.

According to variants described using fig. 8, induction plate seatings 24 can be made, configured to contain one induction plate 36.

According to the invention, and as described using figs. 6 and 10, the induction plate seating 24 are made so as to define a distance D between the upper surface 12 of the support plane 11 and the upper surface 13 of the induction plate seating 24.

To prevent attenuating the electromagnetic field used for heating and/or cooking the food and to guarantee nonetheless a robust support, which does not break easily, for the food containers, the distance D has values comprised between 0.5 mm and 7 mm, advantageously between 2 mm and 6 mm, even more advantageously between 3 mm and 5 mm.

## Claims

1. Cooking device comprising at least one support plane (11) comprising at least one upper surface (12), at least one lower surface (14) and at least one induction hob (34) that includes at least one induction plate (36), **characterized in that** said upper surface (12) is flat and said lower surface (14) comprises at least one aperture (23) connected to an induction plate seating (24) closed at the top and made at least partly in the thickness (S) of the support plane (11) between its upper surface (12) and the lower surface (14) to which at least one induction plate (36) is associated, wherein said induction plate seating (24) is open at the lower part and blind above, and has a height lower than the thickness (S) of said support plane (11), and wherein said at least one induction plate seating (24) comprises an upper surface (13) configured to include at least one induction plate (36) and defining, with respect to said upper surface (12), a distance (D) with values comprised between 0.5 mm and 7 mm, advantageously between 2 mm and 6 mm, even more advantageously between 3 mm and 5 mm.

2. Cooking device as in claim 1, **characterized in that** between said at least one induction plate (36) and the corresponding induction plate seating (24) there is an interspace (26).

3. Cooking device as in claim 2, **characterized in that** said interspace (26) has thicknesses comprised between 0.5 mm and 6 mm, preferably between 1 mm and 5 mm, even more preferably between 1.5 mm and 4 mm.

4. Cooking device as in any claim hereinbefore, **characterized in that** it comprises on said upper surface (12) at least one indicator (30) corresponding to the at least one induction plate (36).

5. Cooking device as in any claim hereinbefore, **characterized in that** the at least one induction plate (36) is associated to said induction plate seating (24) by means of at least one attachment bracket (40).

6. Cooking device as in claim 5, **characterized in that** said at least one attachment bracket (40) is associated to said lower surface (14) by means of attachment elements.

7. Cooking device as in any claim hereinbefore, **characterized in that** said at least one induction hob (34) comprises at least one main feed wiring (42), at least one command panel (48) and at least one wiring for commands (46).

8. Cooking device as in claim 7, **characterized in that** said at least one induction hob (34) comprises at least one shunted feed wiring (44) and at least one shunt box (38).

9. Cooking device as in claim 7 or 8, **characterized in that** the upper surface (12) comprises a command panel seating (50) to which said command panel (48) is associated.

10. Cooking device as in claim 7, 8 or 9, **characterized in that** the upper surface (12) and the lower surface (14) are communicating by means of a hole (28) through which said command panel (48) is connected to the at least one induction plate (36) by means of said command wiring (46) passing through said hole (28).

11. Cooking device as in any claim hereinbefore, **characterized in that** it is made of one or more materials of which at least one can be passed through by an electromagnetic field.

## Patentansprüche

1. *Kochgerät, umfassend mindestens eine Trägerfläche (n), umfassend mindestens eine obere Oberfläche (I2), mindestens eine untere Oberfläche (I4) und mindestens ein Induktionsfeld (34), das mindestens eine Induktionsplatte (36) einschließt, **dadurch gekennzeichnet, dass** die obere Oberfläche (I2) flach ist und die untere Oberfläche (I4) mindestens eine Öffnung (23) umfasst, die mit einer Induktionsplattenaufnahme (24) verbunden ist, die oben geschlossen und mindestens teilweise in der Dicke (S) der Trägerfläche (II) zwischen deren oberer Oberfläche (I2) und der unteren Oberfläche (I4) bereitgestellt ist, mit welcher mindestens eine Induktionsplatte (36) assoziiert ist, wobei die Induktionsplattenaufnahme (24) offen an dem unteren Teil und oben verdeckt ist und eine Höhe aufweist, die geringer als die Dicke (S) der Trägerfläche (II) ist, und wobei die mindestens eine Induktionsplattenaufnahme (24) eine obere Oberfläche (I3) umfasst, die ausgelegt ist, mindestens eine Induktionsplatte (36) einzuschließen und, im Hinblick auf die obere Oberfläche (I2), eine Distanz (D) mit Werten von 0,5 mm bis 7 mm, vorteilhafterweise von 2 mm bis 6 mm, weiterer vorteilhafter Weise von 3 mm bis 5 mm definiert.*

2. *Kochgerät nach Anspruch I, **dadurch gekennzeichnet, dass** zwischen der mindestens einen Induktionsplatte (36) und der korrespondierenden Induktionsplattenaufnahme (24) ein Zwischenraum (26) vorliegt.*

3. *Kochgerät nach Anspruch 2, **dadurch gekennzeichnet, dass** der Zwischenraum (26) eine Dicke von 0,5 mm bis 6 mm, vorzugsweise von I mm bis 5 mm, weiter bevorzugt von I,5 mm bis 4 mm aufweist.*

4. *Kochgerät nach einem der vorgenannten Ansprüche, **dadurch gekennzeichnet, dass** es auf der oberen Oberfläche (I2) mindestens einen Indikator (30) umfasst, der mit der mindestens einen Induktionsplatte (36) korrespondiert.*

5. *Kochgerät nach einem der vorgenannten Ansprüche, **dadurch gekennzeichnet, dass** die mindestens eine Induktionsplatte (36) mit der Induktionsplattenaufnahme (24) mittels mindestens einer Anheftungsklammer (40) assoziiert ist.*

6. *Kochgerät nach Anspruch 5*, ***dadurch gekennzeichnet, dass** die mindestens eine Anheftungsklammer (40) mit der unteren Oberfläche (I4) mittels Befestigungselementen assoziiert ist.*

7. *Kochgerät nach einem der vorgenannten Ansprüche, **dadurch gekennzeichnet, dass** das mindestens eine Induktionsfeld (34) mindestens eine Hauptversorgungsleitung (42), mindestens ein Steuerungspaneel (48) und mindestens eine Leitung für die Steuerungen (46) umfasst.*

8. *Kochgerät nach Anspruch 7*, ***dadurch gekennzeichnet, dass** das mindestens eine Induktionsfeld (34) mindestens eine im Nebenschluss geschaltete ("shunted") Versorgungsleitung (44) oder mindestens eine Shunt-Box (38) umfasst.*

9. *Kochgerät nach Anspruch 7 oder 8, **dadurch gekennzeichnet, dass** die obere Oberfläche (I2) ein Steuerungspaneelaufnahme (50) umfasst, an welche das Steuerungspaneel (48) assoziiert ist.*

10. *Kochgerät nach Anspruch 7*, 8 *oder 9, **dadurch gekennzeichnet, dass** die obere Oberfläche (I2) und die untere Oberfläche (I4) miteinander mittels eines Lochs (28) kommunizieren, wodurch das Steuerungspaneel (48) mit der mindestens einen Induktionsplatte (36) mittels der Steuerungsleitung (46), die durch das Loch (28) hindurchgeführt ist, verbunden ist.*

11. *Kochgerät nach einem der vorgenannten Ansprüche, **dadurch gekennzeichnet, dass** es aus einem oder mehr Materialien, von welchen mindestens eines es erlaubt, dass ein elektromagnetisches Feld hindurchtreten kann, hergestellt ist.*

## Revendications

1. Dispositif de cuisson comprenant au moins un plan de support (11) comprenant au moins une surface supérieure (12), au moins une surface inférieure (14) et au moins une table de cuisson à induction (34) comprenant au moins une plaque à induction (36), **caractérisé en ce que** ladite surface supérieure (12) est plate et ladite surface inférieure (14) comprend au moins une ouverture (23) reliée à un siège de plaque à induction (24) fermé vers le haut et réalisé au moins partiellement dans l'épaisseur (S) du plan de support (11) entre sa surface supérieure (12) et la surface inférieure (14) à laquelle est associée au moins une plaque à induction (36), dans lequel ledit siège de plaque à induction (24) est ouvert au niveau de la partie inférieure et aveugle au-dessus, et a une hauteur inférieure à l'épaisseur (S) dudit plan de support (11), et dans lequel ledit au moins un siège de plaque à induction (24) comprend une surface supérieure (13) configurée pour inclure au moins une plaque à induction (36) et définissant, par rapport à ladite surface supérieure (12), une distance (D) avec des valeurs comprises entre 0,5 mm et 7 mm, avantageusement entre 2 mm et 6 mm, de manière encore plus avantageuse entre 3 mm et 5 mm.

2. Dispositif de cuisson selon la revendication 1, **caractérisé en ce qu'**il y a un espace intermédiaire (26) entre ladite au moins une plaque à induction (36) et le siège de plaque à induction correspondant (24).

3. Dispositif de cuisson selon la revendication 2, **caractérisé en ce que** ledit espace intermédiaire (26) a des épaisseurs comprises entre 0,5 mm et 6 mm, de préférence entre 1 mm et 5 mm, et de manière encore plus préférée entre 1,5 mm et 4 mm.

4. Dispositif de cuisson selon l'une quelconque des revendications précédentes, **caractérisé en ce qu'il** comporte sur ladite surface supérieure (12) au moins un indicateur (30) correspondant à la au moins une plaque à induction (36).

5. Dispositif de cuisson selon l'une quelconque des revendications précédentes, **caractérisé en ce que** la au moins une plaque à induction (36) est associée audit siège de plaque d'induction (24) au moyen d'au moins un support de fixation (40).

6. Dispositif de cuisson selon la revendication 5, **caractérisé en ce que** ledit au moins un support de fixation (40) est associé à ladite surface inférieure (14) au moyen d'éléments de fixation.

7. Dispositif de cuisson selon l'une quelconque des revendications précédentes, **caractérisé en ce que** ladite au moins une table de cuisson à induction (34) comprend au moins un câblage d'alimentation principal (42), au moins un panneau de commande (48) et au moins un câblage pour commandes (46).

8. Dispositif de cuisson selon la revendication 7, **caractérisé en ce que** ladite au moins une table de cuisson à induction (34) comprend au moins un câblage d'alimentation dérivée (44) et au moins un boîtier de dérivation (38).

9. Dispositif de cuisson selon la revendication 7 ou 8, **caractérisé en ce que** la surface supérieure (12) comprend un siège de panneau de commande (50) auquel est associé ledit panneau de commande (48).

10. Dispositif de cuisson selon la revendication 7, 8 ou 9, **caractérisé en ce que** la surface supérieure (12) et la surface inférieure (14) communiquent au moyen d'un trou (28) par lequel ledit panneau de commande (48) est relié à la au moins une plaque à induction (36) au moyen dudit câblage de commande (46) passant à travers ledit trou (28).

11. Dispositif de cuisson selon l'une quelconque des revendications précédentes, **caractérisé en ce qu'**il est constitué d'un ou plusieurs matériaux dont au moins un peut être traversé par un champ électromagnétique.
